# EUROPÄISCHE PATENTSCHRIFT

(11) **EP 2 310 250 B1**
(45) Veröffentlichungstag und Bekanntmachung des Hinweises auf die Patenterteilung: **07.12.2011**
(21) Anmeldenummer: 09777490.5
(22) Anmeldetag: 28.07.2009
(51) Int. Cl.: B62D 55/28, B62D 55/275

(54) **KETTENPOLSTER FÜR EIN KETTENGLIED**
CHAIN PAD FOR A CHAIN LINK
SURCHENILLE POUR MAILLON DE CHENILLE

(30) Priorität: 28.07.2008 DE 102008035182; 28.07.2008 DE 202008010111 U
(43) Veröffentlichungstag der Anmeldung: 20.04.2011
(73) Patentinhaber: GMT Gummi-Metall-Technik GmbH, 77815 Bühl (DE)
(72) Erfinder: FLÜGEL, Uwe, 67150 Niederkirchen (DE)
(74) Vertreter: Miller, Andreas
(86) Internationale Anmeldenummer: PCT/EP2009/005462
(87) Internationale Veröffentlichungsnummer: WO 2010/012449

(56) Entgegenhaltungen:
- EP-A2- 1 900 621
- DE-A1- 2 657 906
- DE-B3- 10 354 486
- GB-A- 2 360 750
- US-A1- 2003 034 690
- US-B1- 6 412 888

## Beschreibung

Die Erfindung betrifft ein Kettenpolster für ein Kettenglied mit einem eine Bodenplatte aufweisenden Grundkörper und mit einem auf einer Innenseite der Bodenplatte mit dem Grundkörper verbundenen Polsterkörper, wobei der Grundkörper auf der Innenseite der Bodenplatte eine Anzahl von über die Innenseite erhabenen Eingriffselemente aufweist, die mit dem Polsterkörper eine formschlüssige Verbindung herstellen.

Derartige Kettenpolster sind aus EP 0 953 498 A1 sowie aus DE 26 57 906 A1, US 6,412,888 B1 und GB 2360750 A bekannt. Die vorbekannten Kettenpolster für ein Kettenglied verfügen über einen Grundkörper, der eine Bodenplatte aufweist, die als ein abschnittsweise abgewinkeltes Metallblech ausgebildet ist. Weiterhin sind die Kettenpolster aus einem Polsterkörper aus einem Gummimaterial ausgestattet, der auf einer Innenseite der Bodenplatte typischerweise durch Vulkanisieren zum Herstellen einer kraftschlüssigen Verbindung angebracht ist. Die vorbekannten Kettenpolster sind dazu eingerichtet, in ein Kettenglied einer Gleiskette für ein Kettenfahrzeug eingeschoben zu werden. Außerdem weist der Grundkörper dieser vorbekannten Kettenpolster auf der Innenseite der Bodenplatte eine Anzahl von über die Innenseite erhabenen Eingriffselemente auf, die mit dem Polsterkörper eine formschlüssige Verbindung herstellen. Damit wird aber nicht mit ausreichender Sicherheit erreicht, dass die vorbekannten Kettenpolster zuverlässig den bei Gleisketten typischerweise auftretenden hohen Belastungen unter allen denkbaren Bedingungen gewachsen sind, da die Kraftaufnahme zwar zu einem nicht unerheblichen Teil durch die formschlüssige Verbindung erfolgt, die aber nicht immer genügt, wenn eine durch Vulkanisieren hergestellte kraftschlüssige Verbindung wenigstens abschnittsweise versagen sollte.
hergestellt ist, ist der Zusammenhalt von Grundkörper und Polsterkörper bei einer verhältnismäßig einfachen Herstellungsweise zuverlässig den bei Gleisketten typischerweise auftretenden hohen Belastungen gewachsen, da die Kraftaufnahme zu einem erheblichen Anteil durch eine formschlüssige Verbindung erfolgt, die insbesondere auch dann einen Zusammenhang sicherstellt, wenn eine durch Vulkanisieren hergestellte kraftschlüssige Verbindung wenigstens abschnittsweise versagen sollte.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnung. Es zeigen:
- Fig. 1: in einer perspektivischen Ansicht ein Ausführungsbeispiel eines erfindungsgemäßen Kettenpolsters und ein Kettenglied,
- Fig. 2: in einer perspektivischen Ansicht das Kettenpolster und das Kettenglied gemäß Fig. 1 in einer Vormontageanordnung,
- Fig. 3: in einer perspektivischen Ansicht das Kettenpolster und das Kettenglied gemäß Fig. 1 und Fig. 2 in einer Endmontageanordnung,
- Fig. 4: in einer perspektivischen Ansicht eine Ausführung eines Grundkörpers eines erfindungsgemäßen Kettenpolsters, der mit sich in Querrichtung erstreckenden Stegen ausgebildet ist,

Der Erfindung liegt daher die Aufgabe zugrunde, ein Kettenpolster der eingangs genannten Art anzugeben, das sich bei einfacher Herstellungsweise gegenüber den vorbekannten Kettenpolstern durch eine noch stabilere Verbindung zwischen dem Grundkörper und dem Polsterkörper auszeichnet.

Diese Aufgabe wird bei einem Kettenpolster der eingangs genannten Art erfindungsgemäß dadurch gelöst, dass den Eingriffselemente noch weitere Elemente wie folgt zugefügt werden.

Den genannten hohen Anforderungen, die an die bei Gleisketten Verwendung findenden Kettenpolstern gestellt werden, wird das erfindungsgemäße Kettenpolster überraschend dadurch gerecht, dass an den Grundkörper in Längsrichtung sich erstreckende und in einem Abstand von den längsseitigen Rändern der Bodenplatte angebrachte Deckleisten angeordnet werden, an deren Außenseiten in einem Abstand voneinander Führungsleistungsabschnitte angebracht sind und an der der Innenseite gegenüberliegenden Außenseite der Bodenplatte im Endbereich eine in Richtung des querseitigen Randes der Bodenplatte schräg abstehende Rastzunge ausgebildet ist, wobei die Rastzunge vorzugsweise wellenförmig dergestalt ausgebildet ist, dass sie zwei von der Außenseite der Bodenplatte wegweisende gewölbte Zungenrandabschnitte und einen zwischen den Zungenrandabschnitten angeordneten, entgegengesetzt zur Bodenplatte hingewölbten Zungenmittenabschnitt aufweist. Durch diese Ausgestaltung wird eine sehr hohe Widerstandsfähigkeit gegen Einbiegen der Rastzunge in Richtung der Bodenplatte erreicht. Durch eine weitere Ausgestaltung der Rastzunge wird eine leichte Demontage des Kettenpolsters aus dem Kettenglied im Wartungs- oder Austauschfall dadurch erreicht, dass bei der Rastzunge beidseitig eines muldenartig in Richtung der Bodenplatte eingewölbten Zungenmittelabschnittes flache Zungenrandabschnitte ausgebildet sind, was zu einer verhältnismäßigen einfachen Formsind, was zu einer verhältnismäßigen einfachen Formbarkeit und damit zum leichten Lösen des Hintergriffes der Rastzunge mit dem Zungenanschlag führt.

Diese und weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnung. Es zeigen:

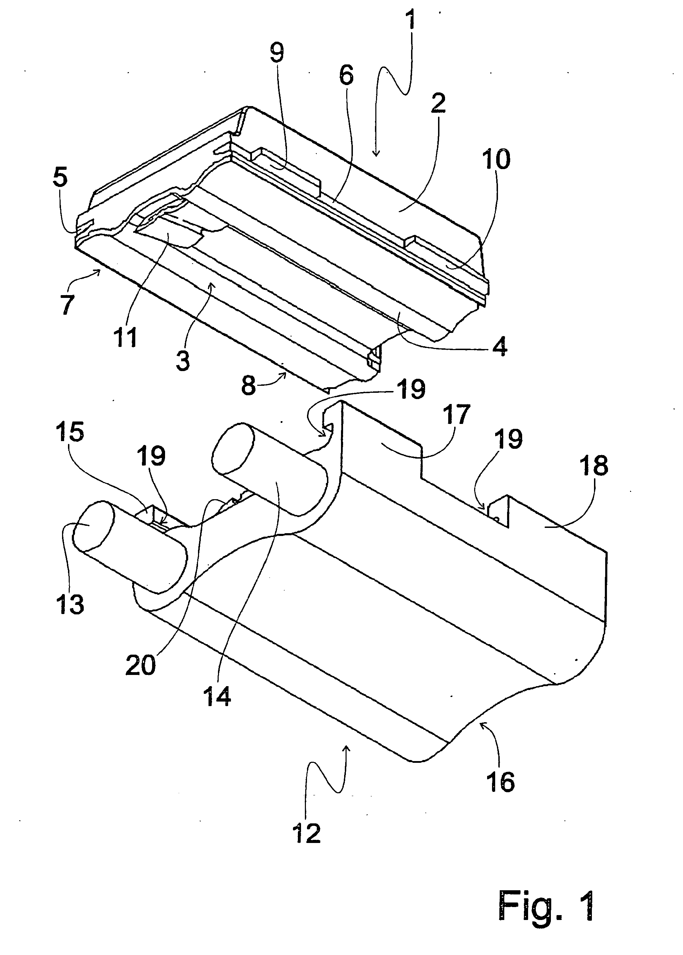

- Fig. 1: in einer perspektivischen Ansicht ein Ausführungsbeispiel eines erfindungsgemäßen Kettenpolsters und ein Kettenglied,

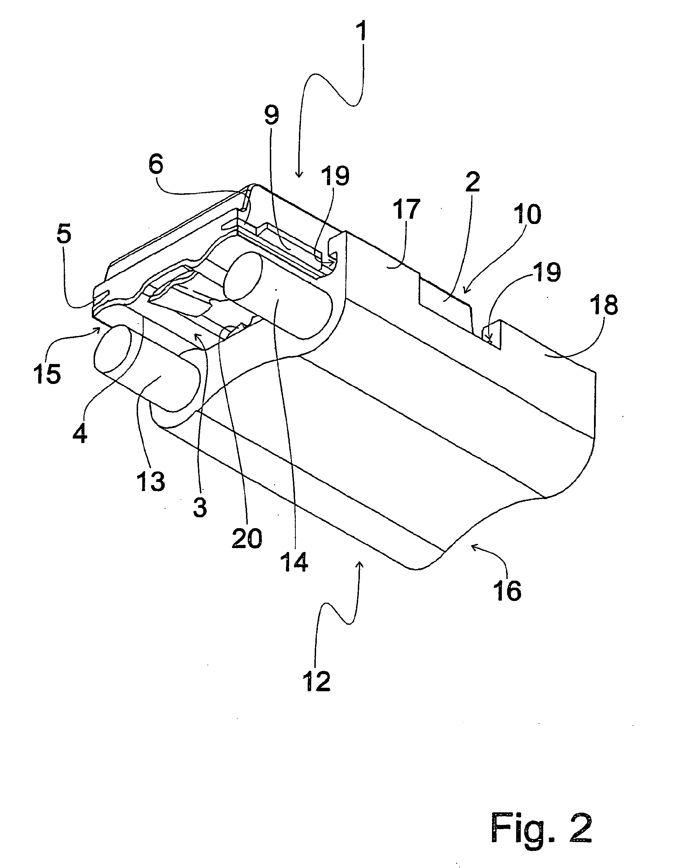

- Fig. 2: in einer perspektivischen Ansicht das Kettenpolster und das Kettenglied gemäß Fig. 1 in einer Vormontageanordnung,

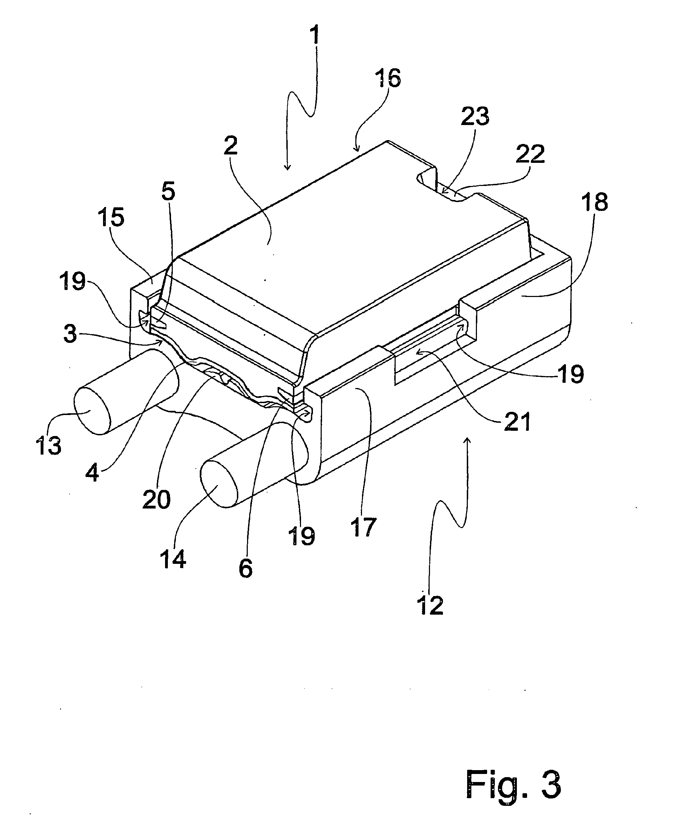

- Fig. 3: in einer perspektivischen Ansicht das Kettenpolster und das Kettenglied gemäß Fig. 1 und Fig. 2 in einer Endmontageanordnung,

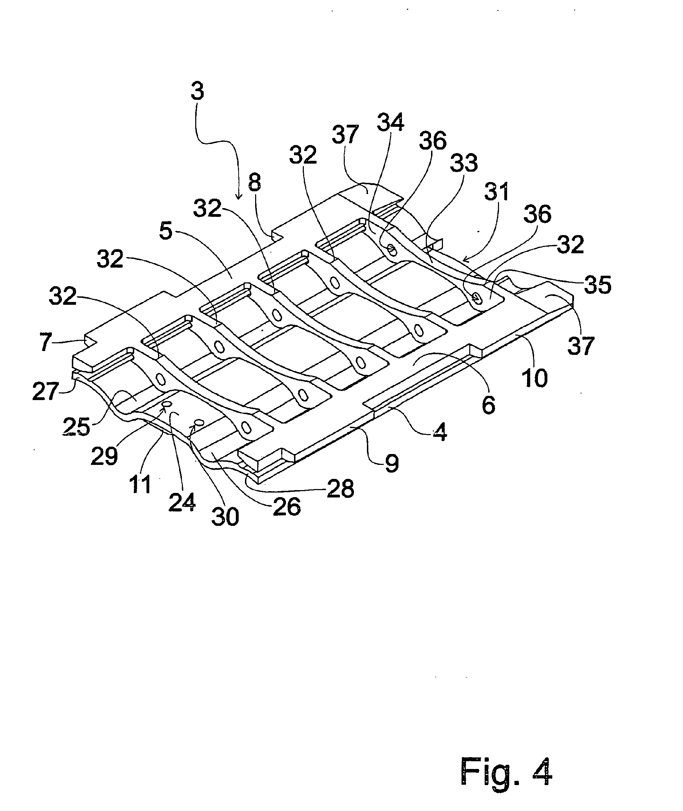

- Fig. 4: in einer perspektivischen Ansicht eine Ausführung eines Grundkörpers eines erfindungsgemäßen Kettenpolsters, der mit sich in Querrichtung erstreckenden Stegen ausgebildet ist,

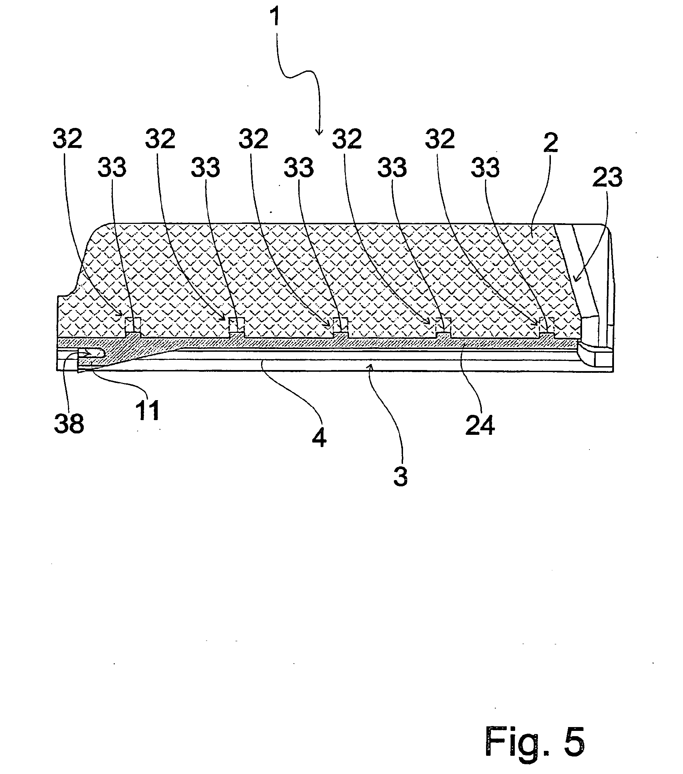

- Fig. 5: in einem Längsschnitt das Ausführungsbeispiel eines Kettenpolsters gemäß Fig. 1,

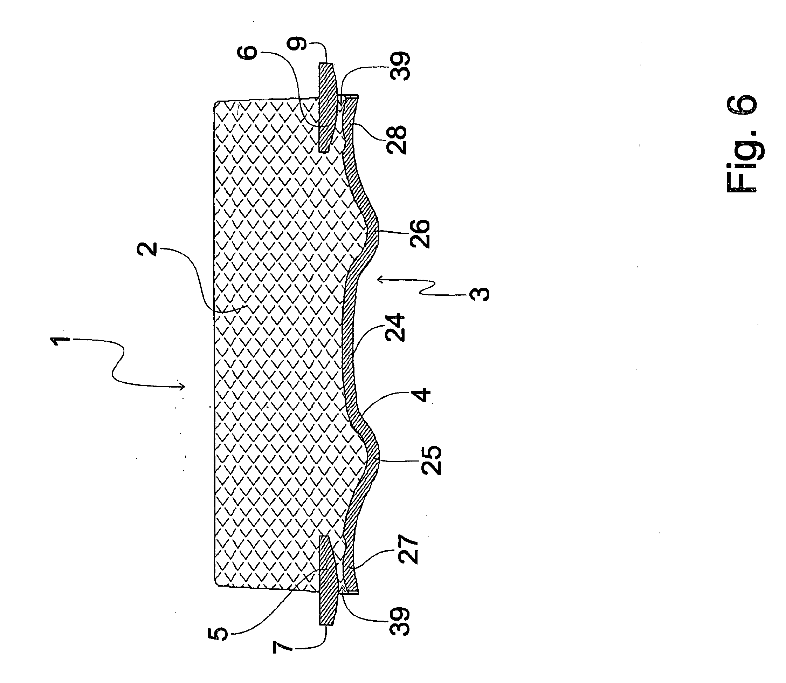

- Fig. 6: in einem zwischen Stegen gelegten Querschnitt das Ausführungsbeispiel eines erfindungsgemäßen Kettenpolsters gemäß Fig. 1,

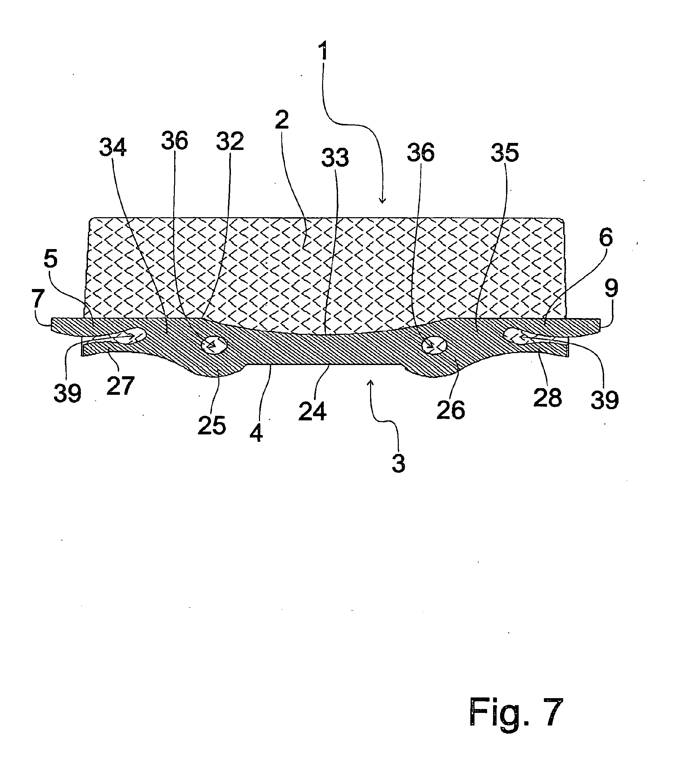

- Fig. 7: in einem durch einen Steg gelegten Querschnitt das Ausführungsbeispiel eines erfindungsgemäßen Kettenpolsters gemäß Fig. 1,

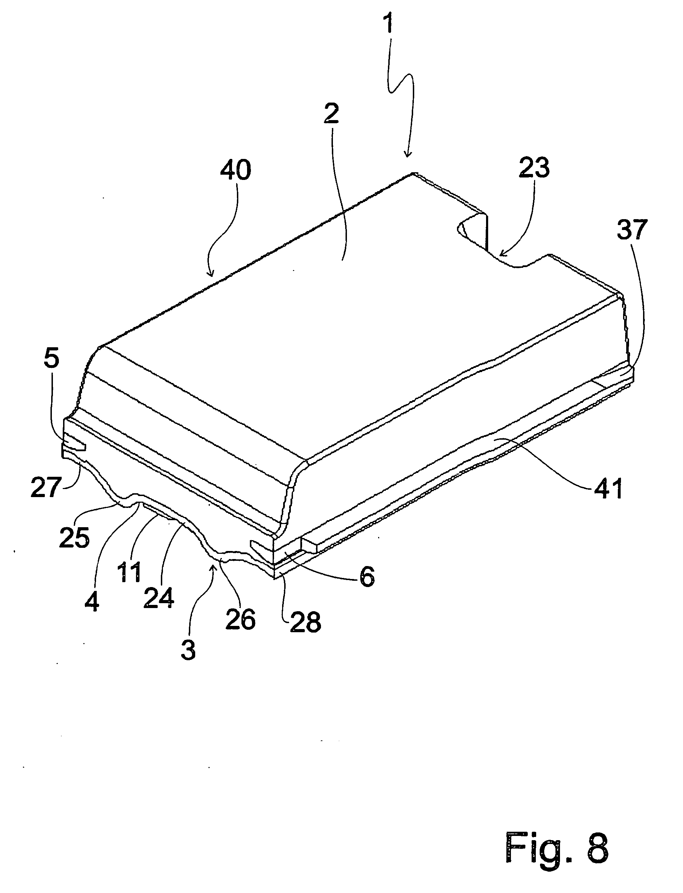

- Fig. 8: in einer perspektivischen Ansicht ein weiteres Ausführungsbeispiel eines erfindungsgemäßen Kettenpolsters,

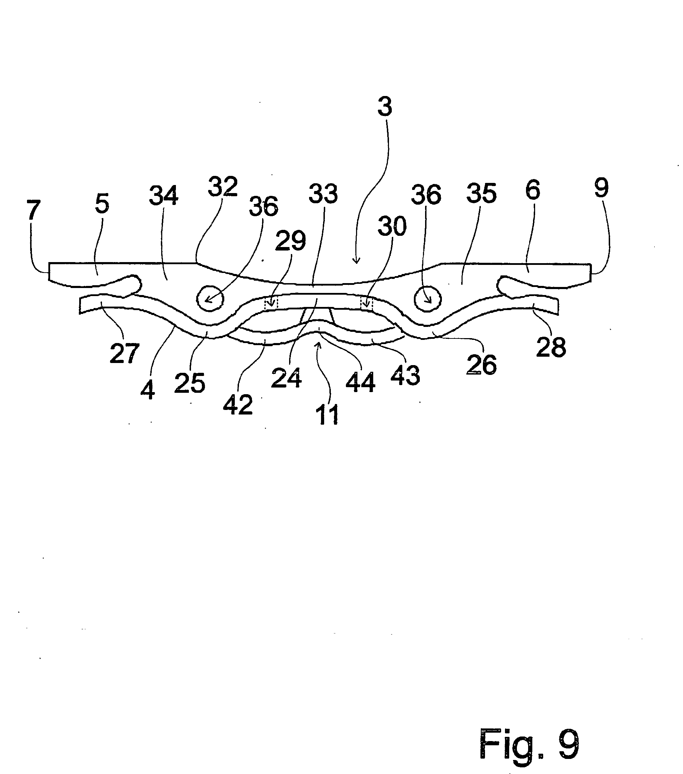

- Fig. 9: in einer Stirnansicht eine erste Ausgestaltung einer Rastzunge an einer Bodenplatte eines erfindungsgemäßen Kettenpolsters und

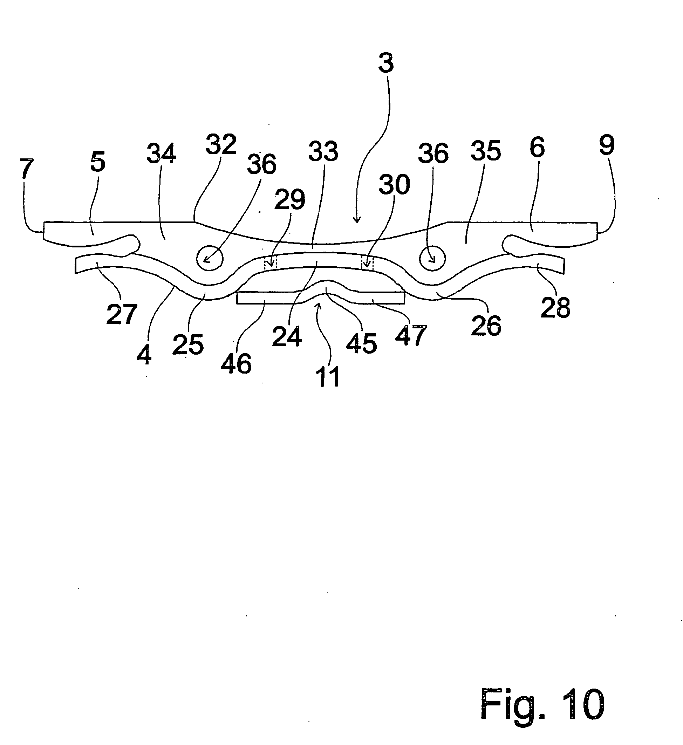

- Fig. 10: in einer Stirnansicht eine weitere Ausgestaltung einer Rastzunge bei einer Bodenplatte eines erfindungsgemäßen Kettenpolsters.

Fig. 1 zeigt in einer perspektivischen Ansicht ein Ausführungsbeispiel eines erfindungsgemäßen Kettenpolsters 1. Das quaderförmige Kettenpolster 1 verfügt über einen Polsterkörper 2 aus einem elastischen Material wie Hartgummi, Polyurethan oder ein elastischer Verbundwerk- oder Kunststoff sowie über einen Grundkörper 3 aus einem Metall- oder einem hochfesten Verbundmaterial oder Kunststoff. Der eine rechteckige Grundform aufweisende Grundkörper 3 ist mit einer Bodenplatte 4 ausgebildet, an deren in der Darstellung gemäß Fig. 1 dem Betrachter abgewandten Innenseite der Polsterkörper 2 angebracht ist. Der Grundkörper 3 verfügt weiterhin über sich in Längsrichtung des Grundkörpers 3 erstreckende und in einem Abstand von den längsseitigen Rändern der Bodenplatte 4 angeordnete Deckleisten 5, 6, an deren Außenseiten bei dem Ausführungsbeispiel gemäß Fig. 1 in einem Abstand voneinander angeordnete Führungsleistenabschnitte 7, 8, 9, 10 angeordnet sind. An der in der Darstellung gemäß Fig. 1 dem Betrachter zugewandten, der Innenseite gegenüberliegenden Außenseite der Bodenplatte 4 ist in einem Endbereich eine in Richtung des querseitigen Randes der Bodenplatte 4 schräg abstehende Rastzunge 11 ausgebildet.

Weiterhin ist in Fig. 1 ein Kettenglied 12 für eine in Fig. 1 in ihrer Gesamtheit nicht dargestellte Gleiskette eines Kettenfahrzeuges dargestellt, das als ein im Wesentlichen quaderförmiger flacher Massivkörper mit an einer Querseite in Längsrichtung überstehenden Verbindungsstiften 13, 14 und mit sich in Längsrichtung erstreckenden, über eine Deckseite überstehenden Wandabschnitten 15, 16, 17, 18 ausgebildet ist. Die auf einer Längsseite liegenden Wandabschnitte 15, 16, 17, 18 weisen einen Abstand voneinander auf, der in etwa der Länge der der Rastzunge 11 abgewandten Führungsleistenabschnitte 8, 10 des Kettenpolsters 1 entspricht. Jeder Wandabschnitt 15, 16, 17, 18 ist mit einer sich in Längsrichtung des Kettengliedes 12 erstreckenden Führungsnut 19 ausgebildet, die zum Aufnehmen der Führungsleistungsabschnitte 7, 8, 9, 10 bzw. durchgehender Führungsleiste 41 eingerichtet sind. Weiterhin ist das Kettenglied 12 in seinem den Verbindungsstiften 13, 14 benachbarten Endbereich mit einem überstehenden Zungenanschlag 20 ausgestattet.

Fig. 2 zeigt das Kettenpolster 1 und den Polsterkörper 2 gemäß Fig. 1 in einer Vormontageanordnung, in der die in der Darstellung gemäß Fig. 2 nicht sichtbaren, der Rastzunge 11 abgewandten Führungsleistenabschnitte 8, 10 zwischen die Wandabschnitte 15, 16, 17, 18 des Kettengliedes 12 eingefügt und alle Führungsleistenabschnitte 7, 8, 9, 10 fluchtend mit den Führungsnuten 19 der Wandabschnitte 15, 16, 17, 18 ausgerichtet sind. Von dieser Vormontageanordnung lässt sich nun das Kettenpolster 1 in das Kettenglied 12 in einer Einschieberichtung bis zu einer Montageanordnung einschieben.

Fig. 3 zeigt das Ausführungsbeispiel gemäß Fig. 1 und Fig. 2 in der Montageanordnung, in der das Kettenpolster 1 vollständig in das Kettenglied 12 eingeschoben worden ist. In der Montageanordnung sind die zuvor in zwischen den Wandabschnitten 15, 16, 17, 18 ausgebildeten Zwischenräumen 21 angeordneten, in Einschiebrichtung vorderseitig liegenden Führungsleistenabschnitte 8, 10 sowie die in Einschieberichtung rückseitig liegenden Führungsleistenabschnitte 7, 9 in die Führungsnuten 9 eingetreten, und das den Verbindungsstiften 13, 14 abgewandte Ende des Kettenpolsters 1 liegt an einer Anschlagwand 22 des Kettengliedes 12 an, während die in der Darstellung gemäß Fig. 3 nicht sichtbare Rastzunge 11 den Zungenanschlag 20 hintergreift. Dadurch ist das Kettenpolster 1 in Längsrichtung sowohl in als auch gegen die Einschieberichtung gesichert.

Weiterhin lässt sich der Darstellung gemäß Fig. 3 entnehmen, dass der Polsterkörper 2 an seinem der in Fig. 3 nicht sichtbaren Rastzunge 11 abgewandten Ende mit einer Endausnehmung 23 ausgebildet ist.

Fig. 4 zeigt in einer perspektivischen Ansicht eine Ausführung des Grundkörpers 3 für ein erfindungsgemäßes Kettenpolster 1 beispielsweise gemäß Fig. 1 mit Blick auf die Innenseite. Die Bodenplatte 4 weist einen sich in Längsrichtung des Grundkörpers 3 erstreckenden, im Wesentlichen flachen mittig angeordneten Bodenplattenmittenabschnitt 24 auf, an den sich in Richtung der Längsränder beidseitig jeweils ein Bodenplattenübergangsabschnitt 25, 26 anschließt. Die Bodenplattenübergangsabschnitte 25, 26 sind muldenartig ausgebildet und gegenüber dem Bodenplattenmittenabschnitt 24 mit ihrem tiefsten Bereich in einem größeren Abstand von den Deckleisten 5, 6 beabstandet als der Bodenplattenmittenabschnitt 24. An den von dem Bodenplattenmittenabschnitt 24 abgewandten Randseiten der Bodenplattenübergangsabschnitte 25, 26 sind den Deckleisten 5, 6 in einem Abstand gegenüberliegende Bodenplattenrandabschnitte 27, 28 ausgebildet, die außenseitig bündig mit den Deckleisten 5, 6 abschließen. Somit hat die Bodenplatte 4 eine doppelt gewellte Grundform, bei der der Bodenplattenmittenabschnitt 24 und die Bodenplattenrandabschnitte 27, 28 im Wesentlichen in einer Ebene liegen und die Bodenplattenübergangsabschnitte 25, 26 jeweils eine sich in Längsrichtung erstreckende Mulde bilden.

Der Bodenplattenmittenabschnitt 24 weist der Rastzunge 11 gegenüberliegend bei diesem Ausführungsbeispiel zwei Durchlassausnehmungen 29, 30 auf, die einen Durchbruch zwischen der in der Darstellung gemäß Fig. 4 dem Betrachter zugewandten Innenseite und der in der Darstellung gemäß Fig. 4 dem Betrachter abgewandten Außenseite der Bodenplatte 4 bilden. Auf dem der Rastzunge 11 abgewandten querseitigen Rand ist in den Bodenplattenmittenabschnitt 24 eine Mittenabschnittsrandausnehmung 31 eingebracht.

Der Grundkörper 3 eines erfindungsgemäßen Kettenpolsters 1 verfügt über eine Anzahl von in Querrichtung ausgerichteten Stegen 32, die auf der Innenseite der Bodenplatte 4 angeordnet und über die Bodenplatte 4 erhaben sind. Jeder Steg 32 ist mit einem mittig angeordneten Stegmittenabschnitt 33 und mit beidseitig des Stegmittenabschnitts 33 angeordneten Stegrandabschnitten 34, 35 ausgebildet. Jeder Stegmittenabschnitt 33 erstreckt sich über den Bodenplattenmittenabschnitt 24, während die Stegrandabschnitte 34, 35 im Bereich der Bodenplattenübergangsabschnitte 25, 26 angeordnet sind. Wie aus Fig. 4 ersichtlich ist, weist jeder Stegmittenabschnitt 33 in der Mitte eine minimale Höhe über den Bodenplattenmittenabschnitt 24 auf, während die Höhe in Richtung der Stegrandabschnitte 34, 35 zunimmt und im Bereich der Bodenplattenübergangsabschnitte 25, 26 maximal ist. In die Stegrandabschnitte 34, 35 sind bei der Ausgestaltung gemäß Fig. 4 als Eingriffselemente jeweils eine Eingriffsausnehmung 36 eingebracht, die die Stege 32 in Längsrichtung queren.

An den von dem Stegmittenabschnitt 33 abgewandten Enden der Stegrandabschnitte 34, 35 sind als weitere Eingriffselemente die Deckleisten 5, 6 in einem Abstand von den Bodenplattenrandabschnitten 27, 28 angeformt, wobei die von der Rastzunge 11 abgewandten Enden der Deckleisten 5, 6 jeweils eine Anfahrschräge 37 aufweisen, um das vorangehend erläuterte Einschieben des Kettenpolsters 1 in das Kettenglied 2 zu erleichtern.

Fig. 5 zeigt in einem Längsschnitt das Kettenpolster 1 gemäß Fig. 1. Aus Fig. 5 ist ersichtlich, dass der Polsterkörper 2 die Stege 32 vollständig umschließt, wobei beim Herstellen des Polsterkörpers 2 in einem noch fließfähigen Zustand Material zwischen den Bodenplattenmittenabschnitt 24 und die Rastzunge 11 eingetreten ist und somit für die Rastzunge 11 eine Zungenunterfütterung 38 bildet, die den Widerstand gegen dauerhafte, die Sicherung des Kettenpolsters 1 in dem Kettenglied 12 herabsetzende Verformung erhöht.

Fig. 6 zeigt das Kettenpolster 1 gemäß Fig. 1 in einem Querschnitt zwischen zwei in der Darstellung gemäß Fig. 6 nicht sichtbaren Stegen 32. Aus Fig. 6 ist ersichtlich, dass aufgrund des Abstandes der Deckleisten 5, 6 zu der Bodenplatte 4 das Material des Polsterkörpers 2 für die Deckleisten 5, 6 eine Leistenunterfütterung 39 bildet, so dass die Deckleisten 5, 6 im Rahmen der Elastizität des Materiales des Polsterkörpers 2 stabilisiert und mit einer gewissen Elastizität gelagert sind.

Fig. 7 zeigt in einem Querschnitt das Kettenpolster 1 gemäß dem Ausführungsbeispiel von Fig. 1 im Querschnitt durch einen Steg 32. Aus Fig. 7 ist ersichtlich, dass die in den Bodenplattenübergangsabschnitten 25, 26 eingebrachten Durchlassausnehmungen 29, 30 mit Material des Polsterkörpers 2 verfüllt sind, so dass neben den Leistenunterfütterungen 39 weitere über die Fläche des Grundkörpers 3 verteilte formschlüssige Verbindungen zwischen dem Polsterkörper 2 und dem Grundkörper 3 geschaffen sind.

Fig. 8 zeigt in einer perspektivischen Darstellung ein weiteres Ausführungsbeispiel eines erfindungsgemäßen Kettenpolsters 1, wobei sich bei dem Ausführungsbeispiel gemäß Fig. 1 und dem Ausführungsbeispiel gemäß Fig. 8 einander entsprechende Elemente mit den gleichen Bezugszeichen versehen und im weiteren nicht näher erläutert sind. Das Ausführungsbeispiel gemäß Fig. 8 verfügt über sich im Wesentlichen über die gesamte Länge der Deckleisten 5, 6 erstreckende Führungsleisten 40, 41, die in die Führungsnuten 19 eines in Fig. 1 bis Fig. 3 dargestellten Kettengliedes 12 einschiebbar sind. Dieses Ausführungsbeispiel zeichnet sich aufgrund der über die gesamte Länge der Deckleisten 5, 6 bewerkstelligte Krafteinleitung durch eine besonders hohe Stabilität aus.

Fig. 9 zeigt in einer Stirnansicht auf einen Grundkörper 3 für ein erfindungsgemäßes Kettenpolster 1 eine erste Ausgestaltung einer Rastzunge 11, die zwei von der Außenseite der Bodenplatte 4 weg weisend gewölbte Zungenrandabschnitte 42, 43 und einen zwischen den Zungenrandabschnitten 42, 43 angeordneten, entgegengesetzt zu der Bodenplatte 4 hin gewölbten Zungenmittenabschnitt 44 aufweist. Diese Ausgestaltung einer Rastzunge 11 zeichnet sich durch eine sehr hohe Widerstandsfähigkeit gegen Einbiegen in Richtung der Bodenplatte 4 aus.

Fig. 10 zeigt in einer Stirnansicht auf einen Grundkörper 3 für ein erfindungsgemäßes Kettenpolster 1 eine weitere Ausgestaltung einer Rastzunge 11, wobei bei dieser Ausgestaltung beidseitig eines muldenartig in Richtung der Bodenplatte 4 eingewölbten Zungenmittenabschnittes 45 flache Zungenrandabschnitte 46, 47 ausgebildet sind. Diese Ausgestaltung einer Rastzunge 11 zeichnet sich durch eine verhältnismäßig einfache Verformbarkeit zum Lösen des Hintergriffes der Rastzunge 11 mit dem Zungenanschlag 20 bei einer Demontage des Kettenpolsters 1 aus dem Kettenglied 2 im Wartungsfall aus.

## Patentansprüche

1. Kettenpolster für ein Kettenglied (12) mit einem Grundkörper (3) bestehend aus zu einander fest verbundene Bodenplatte (4) und auf der Innenseite der Bodenplatte(4) eine Anzahl von Eingriffselementen (5, 6; 36) mit Eingriffsausnehmungen (36) versehenen Stegen (32) ebenfalls verbunden, sowie einem auf einer Innenseite von dem Grundkörper (3) verbundenen Polsterkörper (2), wobei die Eingriffsausnehmungen in den Stegen mit dem Polsterkörper (2) eine formschlüssige Verbindung herstellen, **dadurch gekennzeichnet, dass** an jeder Außenseite eines jeden Steges (32) in einem Abstand von der Innenseite der Bodenplatte (4) als weiteres Eingriffselement eine Deckleiste (5, 6) angeordnet ist und der Grundkörper (3) aus Metall- oder einem hochfestem Verbundmaterial oder Kunststoff und der Polsterkörper (2) aus Hartgummi, Polyurethan, Gummimischungen und/oder elastischem Verbundwerk- oder Kunststoff besteht

2. Kettenpolster nach Anspruch 1, **dadurch gekennzeichnet, dass** an den Deckleisten (5, 6) in Längsrichtung über den Rand der Bodenplatte (4) überstehende Führungsleistenabschnitte (7, 8, 9, 10) oder durchgehende Führungsleisten (40, 41) ausgebildet sind.

3. Kettenpolster nach Anspruch 1 oder Anspruch 2 **dadurch gekennzeichnet, dass** die Bodenplatte (4) mit einem gegenüber den seitlich liegenden Bodenplattenübergangsabschnitten (25, 26) in Richtung des Polsterkörpers (2) versetzten Bodenplattenmittenabschnitt (24) ausgebildet ist und dass die Stege (32) im Bereich des Bodenplattenmittenabschnittes (24) einen Stegmittenabschnitt (33) mit einer geringeren Höhe als im Bereich der Bodenplattenübergangsabschnitte (25, 26) angeordnete StePgrandabschnitte (34, 35) aufweist.

4. Kettenpolster nach Anspruch 3, **dadurch gekennzeichnet, dass** an dem Bodenplattenmittenabschnitt (24) abgewandten Seiten des Bodenplattenübergangsabschnittes (25, 26) Bodenplattenrandabschnitte (27, 28) ausgebildet sind, die den Deckleisten (5, 6) in einem Abstand gegenüberliegend angeordnet sind.

5. Kettenpolster nach Anspruch 4, **dadurch gekennzeichnet, dass** die Eingriffsausnehmungen (36) im Bereich der Stegrandabschnitte (34, 35) ausgebildet sind.

6. Kettenpolster nach einem der Ansprüche 3 bis 5, **dadurch gekennzeichnet, dass** an einem längsseitigen Endbereich des Bodenplattenmittenabschnittes (24) an einer der Innenseite gegenüberliegenden Außenseite der Bodenplatte (4) eine schräg in Richtung eines querseitigen Randes der Bodenplatte (4) abgestellte Rastzunge (11) ausgebildet ist und dass in dem Bodenplattenmittenabschnitt (24) im Bereich der Rastzunge (11) wenigstens eine Durchlassausnehmung (29, 30) ausgebildet ist.

7. Kettenpolster nach Anspruch 6, **dadurch gekennzeichnet, dass** die Rastzunge (11) wellenförmig dergestalt ausgebildet ist, dass sie zwei von der Außenseite der Bodenplatte (4) wegweisende gewölbte Zungenrandabschnitte (42, 43) und zwischen den Zungenrandabschnitten (42, 43) einen von der Bodenplatte (4) weg gewölbten Zungenmittenabschnitt (44) aufweist.

8. Kettenpolster nach Anspruch 6, **dadurch gekennzeichnet, dass** die Rastzunge (11) so geformt ist, dass sie beidseitig eines muldenartig in Richtung der Bodenplatte 4 eingewölbten Zungenmittenabschnittes (45) flache Zungenrandabschnitte (46, 47) aufweist.

## Claims

1. Chain buffer for a chain link (12) with a basis body (3) consisting of to each other firmly connected bottom plate (4) and on the inner side of the bottom plate (4) a number of engaging elements (5, 6; 36) studs (32) provided with engaging recesses (36) are also connected, and a buffer body (2) connected to the basis body (3) on the inner side, whereas the engaging recesses in the studs with the buffer body (2) build a form-closed connection, **characterized in that** on each outer side of each stud (32) in a distance to the inner side from the bottom plate (4) there is a cover strip (5, 6) located as further engaging element, and the basis body (3) consists of metal or a high-strength composite material or plastic and the buffer body (2) consists of hard rubber, polyurethane, rubber compound and/or elastic composite material or plastic

2. Chain buffer according to claim 1, **characterized in that** on the cover strips (5, 6) in longitudinal direction over the border of the bottom plate (4) projecting guide strip sections (7, 8, 9, 10) or continuous guide strips (40, 41) are arranged.

3. Chain buffer according to claim 1 or claim 2 **characterized in that** the bottom plate (4) with opposite of the lateral located bottom plate transition sections (25, 26) in the direction of the buffer body (2) an offset bottom plate center section (24) is arranged and that the studs (32) in the area of the bottom plate center section (24) feature a stud center section (33) with a height below the one in the area of the bottom plate transition sections (25, 26) located stud border sections (34, 35).

4. Chain buffer according to claim 3, **characterized in that** on the side opposite of the bottom plate center section (24) of the bottom plate transition sections (25, 26), bottom plate border sections (27, 28) are arranged, located in a distance opposite of the cover strips (5, 6).

5. Chain buffer according to claim 4, **characterized in that** the engaging recesses (36) are arranged in the area of the stud border sections (34, 35).

6. Chain buffer according to the claims 3 through 5, **characterized in that** on the lateral end section of the bottom plate center section (24), on an opposite to the inner side located outer side of the bottom plate (4) a diagonal, in the direction of the cross border of the bottom plate (4) located engaging latch (11) is arranged, and that in the bottom plate center section (24) in the area of the engaging latch (11) at least one transition recess (29, 30) is arranged.

7. Chain buffer according to claim 6, **characterized in that** the engaging latch (11) is designed as wave-shaped type in a way that it features from the outer side of the bottom plate (4) away pointing two curved latch border sections (42, 43) and between the latch border sections (42, 43) a from the bottom plate (4) away curved latch border section (44).

8. Chain buffer according to claim 6, **characterized in that** the engaging latch (11) is shaped in a way that the on both sides of a trough like in the direction of the bottom plate 4 curved-in latch center section (45) features flat latch border sections (46, 47).

## Revendications

1. Coussin de chenille pour un patin (12) comprenant un corps de base (3) composé d'une plaque de base (4) solidaire et sur la face intérieure de la plaque de base (4) d'une pluralité d'éléments de contact (5, 6; 36) comportant des étançons (32) pourvus de creux de prise (36) également solidaires ainsi que d'un coussin (2) fixé sur la face intérieure du corps de base (3), les creux de prise dans les étançons formant une liaison à engagement positif avec le coussin (2), **caractérisé en ce que** sur chacune des faces extérieures de chacun des étançons (32) une baguette de couverture (5, 6) est disposée en un écart de la face intérieure de la plaque de base (4) en tant qu'élément de contact supplémentaire, et **en ce que** le corps de base (3) est composé d'une matière métallique ou composite à haute résistance ou en matière synthétique et que le coussin (2) est composé de caoutchouc durci, de polyuréthane, d'un mélange de caoutchouc et/ou d'un matériau composite élastique ou de matières plastiques.

2. Coussin de chenille selon la revendication 1, **caractérisé en ce que** sur les baguettes de couverture (5, 6) sont formées dans le sens longitudinal de sections de baguettes de guidage (7, 8, 9, 10) ou de baguettes de guidage continues (40, 41) dépassant la limite de la plaque de base (4).

3. Coussin de chenille selon la revendication 1 ou la revendication 2 **caractérisé en ce que** la plaque de base (4)
est formée comprenant une section centrale (24) de la plaque de base décalée dans le sens du coussin (2) par rapport aux sections de transition (25, 26) latérales de la plaque de base et **en ce que** les étançons (32) présentent au niveau de la section centrale (24) de la plaque de base une zone centrale d'étançon (33) ayant une hauteur réduite par rapport à celle au niveau des sections de transition (25, 26) de la plaque de base par rapport aux extrémités des étançons (34, 35).

4. Coussin de chenille selon la revendication 3, **caractérisé en ce que** des sections de bordure (27, 28) de la plaque de base sont formées sur les côtés opposés aux sections de transition (25, 26) de la plaque de base qui sont disposées face aux baguettes de couverture (5, 6) avec un écart.

5. Coussin de chenille selon la revendication 4, **caractérisé en ce que** les creux de prise (36) sont formés dans la zone des extrémités des étançons (34, 35).

6. Coussin de chenille selon l'une des revendications 3 à 5, **caractérisé en ce que** dans l'une des zones d'extrémité à côté de la section centrale (24) de la plaque de base sur une face extérieure de la plaque de base (4) en face de la face intérieure une languette à cran (11) est formée en biais dans le sens d'une bordure transversale de la plaque de base (4) et **en ce qu'**un creux de passage (29, 30) au moins est formé dans la section centrale (24) de la plaque de base dans la zone de la languette à cran (11).

7. Coussin de chenille selon la revendication 6, **caractérisé en ce que** la languette à cran (11) présente une forme ondulatoire de manière à ce qu'elle présente deux sections de bordure de languette (42, 43) bombées dans la direction opposée à la face extérieure de la plaque de base (4) et entre les sections de bordure de languette (42, 43) une section centrale de languette (44) bombée dans la direction opposée à la plaque de base (4).

8. Coussin de chenille selon la revendication 6, **caractérisé en ce que** la languette à cran (11) est formée de telle manière qu'elle présente de part et d'autre d'une section centrale de la languette (45) sous forme d'auge dans le sens de la plaque de base (4) des sections de bordures de languette plates (46, 47).
